# EUROPEAN PATENT SPECIFICATION

(11) **EP 2 297 462 B1**
(45) Date of publication and mention of the grant of the patent: **01.08.2012**
(21) Application number: 09734934.4
(22) Date of filing: 24.04.2009
(51) Int. Cl.: F04B 53/16, F16J 15/28

(54) **PACKING CUP FOR A RECIPROCATING COMPRESSOR**
DICHTUNGSRING FÜR EINEN HUBKOLBENVERDICHTER
COUPELLE DE GARNITURE POUR COMPRESSEUR À PISTON

(30) Priority: 24.04.2008 IT MI20080770
(43) Date of publication of application: 23.03.2011
(73) Proprietor: Nuovo Pignone S.p.A., 50127 Florence (IT)
(72) Inventor: CAMPO, Nicola, I-50143 Firenze (IT); GIANNOZZI, Massimo, I-50127 Firenze (IT); BELLACCI, Michelangelo, I-50100 Firenze (IT); CHIESI, Francesco, I-50127 Firenze (IT)
(74) Representative: Williams, Andrew Richard
(86) International application number: PCT/EP2009/003064
(87) International publication number: WO 2009/130057

(56) References cited:
- GB-A- 457 025
- GB-A- 928 749
- US-A- 4 809 993
- US-A- 5 873 575

## Description

The present invention refers to a packing cup for a reciprocating compressor, able to be used in particular but not exclusively on high-pressure compressors (so- called "hyper compressors") operating in the field of production of polymers and copolymers derived from ethylene.

As known, a compressor is a machine capable of raising the pressure of a compressible fluid (gas) through the use of mechanical energy. In reciprocating compressors, the compression of the fluid is carried out by one or more mobile pistons with reciprocating motion inside a respective cylinder. The fluid to be compressed is drawn into the cylinder through one or more intake ducts, whereas the compressed fluid is expelled from the cylinder towards one or more delivery ducts.

Commonly, the piston or pistons of a reciprocating compressor are actuated by electric motors or else by internal combustion engines, through a crankshaft for transmitting the motion and a conventional connecting rod- crank mechanism.

US-A-4 809 993 discloses a housing having an opening therein with a rod extending within the opening. An annular seal is provided around the rod within the opening. The seal includes an annular washer around the rod and an annular sleeve axially adjacent the washer.

Reciprocating compressors that operate in plants for producing polymers and copolymers, for example Low- Density Poly-Ethylene (LDPE) or Ethyl -Vinyl -Acetate (EVA), are subject to extremely high fatigue conditions. For example, the cylinders of the second stage of a hyper compressor used for producing polymers and copolymers can manage to compress the gas (gaseous ethylene) up to a pressure of over 3500 bar. Therefore, due to the very high operating pressures and the pressure fluctuations between the suction and discharge ducts, the cylinders of a reciprocating hyper compressor must be designed so as to withstand high fatigue loads.

In general, in a cylinder of a reciprocating compressor there is a series of packing cups each containing a sealing element inside of it. The group of packing cups is commonly known as a packing stack. In order to improve fatigue performance, each packing cup is in turn made up of two concentric rings or discs assembled by interference fit, in order to generate a state of precompression on the inner disc, which is subjected to the greater stresses due to the pressure fluctuations of the gas.

Based upon experience, it has been found that the packing stack usually constitutes the most critical element for the reliability of the cylinder of a hyper compressor. During normal operation of the machine there may indeed be different types of breakages on the packing cups, including erosion and wearing phenomena on the coupling surfaces, as well as radial and circumferential cracking due to fatigue. Each breakage, necessarily resulting in the machine being stopped to allow the appropriate maintenance work, is therefore a cause of economic damage for the user in terms of spare parts that need to be used and of reduction in productivity of the plant.

Up to now different techniques have been used to improve the strength of packing cups of a hyper compressor, normally made from low alloy steel alloys. In order to reduce the phenomenon of wear and increase the fatigue life cycle of packing cups, the relative inner discs can be subjected to autofrettage, shot peening and plating treatments. However, due to the kind of material from which known packing cups are manufactured, as well as the type of loads that are applied to packing cups, there are very frequently problems of fatigue breakage of the type mentioned above.

The purpose of the present invention is therefore to make a packing cup for reciprocating compressors, in particular but not exclusively for hyper compressors operating in the field of production of polymers and copolymers derived from polyethylene, capable of improving the reliability and of increasing the operating life cycle of the packing stack of the compressor compared to what occurs according to the prior art.

This purpose according to the present invention is accomplished by making a packing cup for reciprocating compressors as outlined in claim 1.

Further characteristics of the invention are highlighted by the dependent claims, which are an integral part of the present description.

The characteristics and advantages of a packing cup for reciprocating compressors according to the present invention shall become clearer from the following description, given as a non-limiting example, referring to the attached schematic drawings, in which:
figure 1 is a partial section view of a cylinder of a reciprocating hyper compressor in which it is possible to use one or more packing cups made according to the present invention;
figure 2 is a section view of a packing stack of the reciprocating hyper compressor shown in figure 1; and figure 3 is a perspective view of a packing cup for reciprocating compressors made according to the present invention.

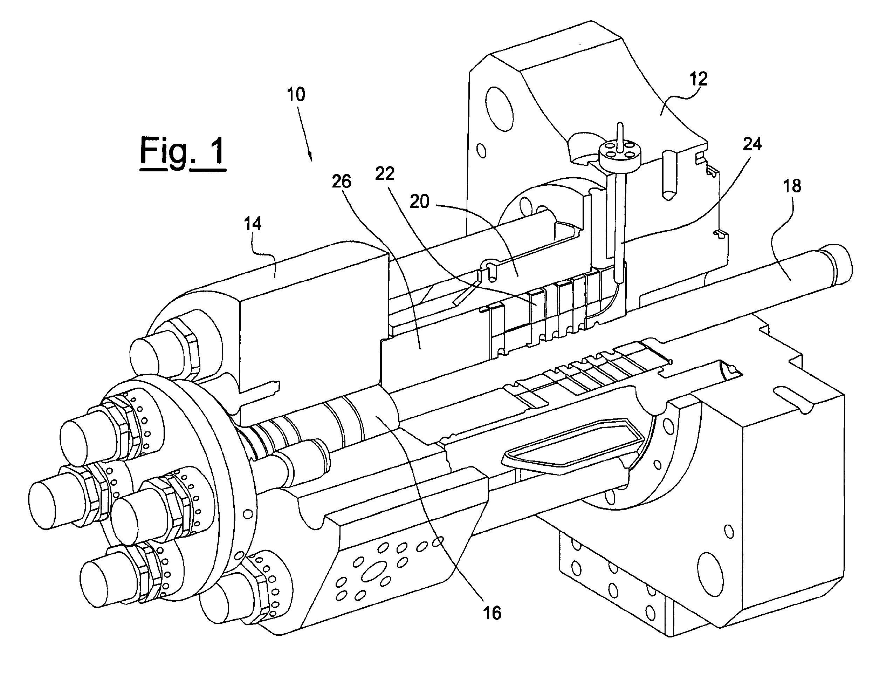

With reference in particular to figure 1, a cylinder 10 of a reciprocating compressor, in particular the cylinder of a second stage of a reciprocating hyper compressor used for producing polymers and copolymers derived from ethylene, like for example Low-Density Poly-Ethylene (LDPE) or Ethyl-Vinyl-Acetate (EVA), is schematically shown in partial section.

The cylinder 10 essentially comprises a flange 12, which is used as connection with a support framework (not shown) for the compressor, and a head 14, which houses the suction and discharge valves 16 for the gas to be compressed. The gas is compressed by a special piston 18 consisting of a cylindrical shaft, known as a "plunger", which slides with reciprocating motion inside a packing stack and a spacer element 26 arranged between the head 14 and the packing stack itself.

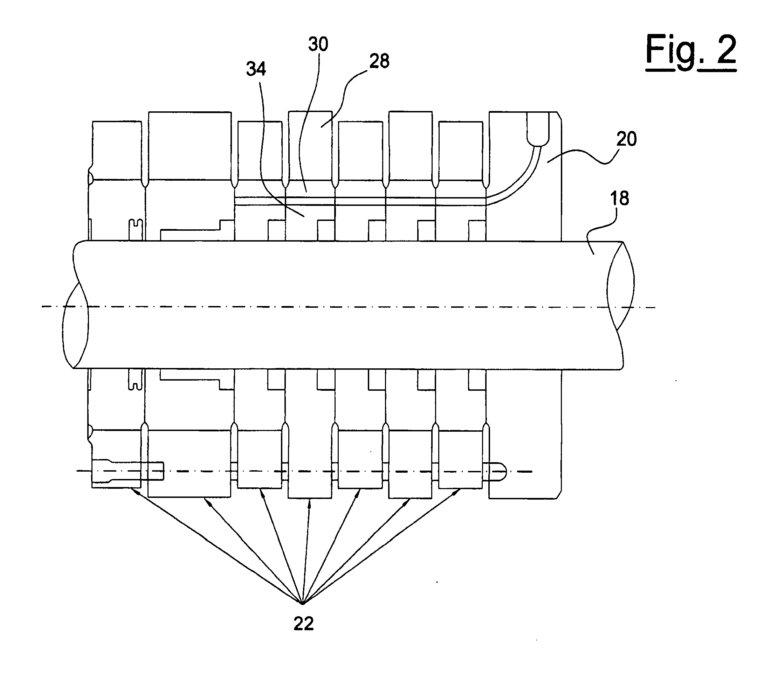

The packing stack consists of a plurality of packing cups 22 (figure 2). Outside of the packing stack there is a component 20, known as a sheath, which performs the function of containing the cooling oil that flows outside of the packing cups 22.

In addition, a lubricating and cooling system takes oil through feed rods 24 (figure 1) into the packing cups 22. Such oil has the purpose of reducing the friction between the sealing elements (described hereafter) and the plunger 18 and of taking away the heat generated during sliding.

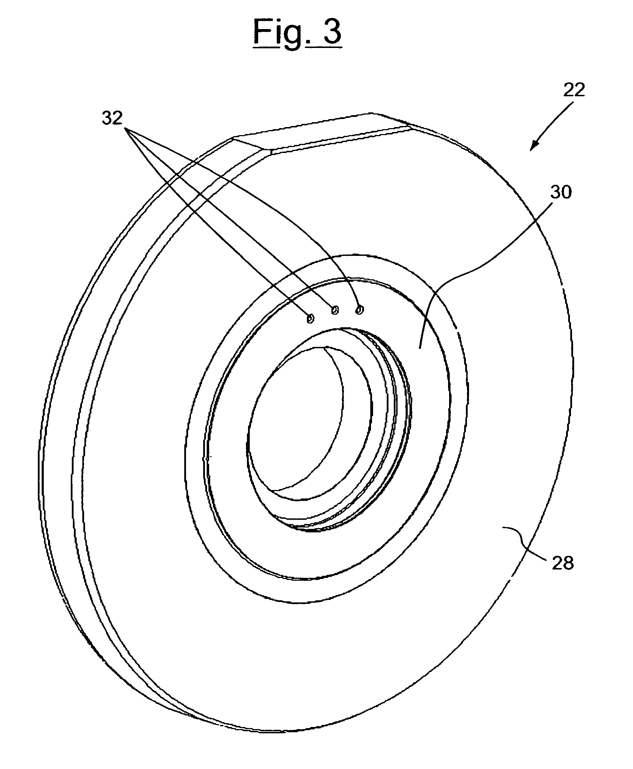

Each packing cup 22 (figure 3) consists of two concentric discs, in other words a first outer disc 28 and a second inner disc 30 inside which a seat is formed from a sealing element. The two concentric discs 28 and 30 are shrink-fitted, so as to generate a tensile compression state on said inner disc 30 in the normal operating conditions of the compressor. One or more axial through holes 32 are thus made on the inner disc 30 for the passage of the lubricating oil for the lubrication of the sealing elements, fed by the lubrication rods 24.

According to the invention, at least the inner disc 30 of each packing cup 22 is manufactured from a high-strength metallic alloy, capable of ensuring that the packing cup 22 itself has good characteristics of reliability and of resistance to fatigue and to wear. In detail, such a metallic alloy, typically steel, has the following chemical composition of alloying elements (values expressed in percentage weight compared to the total weight of the material):

| COMPONENT | % weight |
|---|---|
| Carbon (C) | 0.13% ÷ 0.17% |
| Chrome (Cr) | 1.80% ÷ 2.20% |
| Nickel (Ni) | 9.50% ÷ 10.50% |
| Cobalt (Co) | 13.50% ÷ 14.50% |
| Molybdenum (Mo) | 0.90% ÷ 1.10% |
| Aluminium (Al) | 0.015% max |
| Titanium (Ti) | 0.015% max |
| Manganese (Mn) | 0.10% max |
| Silicon (Si) | 0.10% max |
| Sulphur (S) | 0.005% max |
| Phosphorus (P) | 0.008% max |

The material is obtained firstly through vacuum induction melting (VIM) technology and is then remelted, in special arc furnaces, through vacuum arc remelting (VAR) technology. In this way, the presence of impurities is reduced to the minimum and at the same time a better resistance to breaking of the material is obtained.

Finally, after having undergone a series of plastic deformation cycles that improve its mechanical characteristics, the material is subjected to a heat treatment (hot), through heat cycles carried out inside furnaces in controlled atmosphere, in order to maximise its characteristics of hardness, toughness and strength.

Thanks to the particular material from which they are made and the subsequent metallurgic treatments, the packing cups 22 according to the invention have demonstrated a reliability factor of over 40% more than that of known packing cups, under the same conditions of use.

It has thus been seen that the packing cup for reciprocating compressors according to the present invention achieves the purposes outlined earlier.

The packing cup for reciprocating compressors of the present invention thus conceived can in any case undergo numerous modifications and variants, all of which are covered by the same inventive concept.

The scope of protection of the invention is therefore defined by the attached claims.

## Claims

1. Packing cup (22) for the cylinder (10) of a reciprocating compressor, said packing cup (22) being formed from a first outer disc (28) and from a second inner disc (30), concentric to said first outer disc (28) and inside which a seat is formed for at least one sealing element for a piston (18), **characterised in that** at least one from said inner disc (30) or outer disc (28) is manufactured from a high-strength steel that comprises the following percentages by weight, compared to the total weight of the material, of the following alloying elements:
- Carbon (0.13% ÷ 0.17%);
- Chrome (1.80% ÷ 2.20%);
- Nickel (9.50% ÷ 10.50%);
- Cobalt (13.50% ÷ 14.50%);
- Molybdenum (0.90% ÷ 1.10%).

2. Packing cup (22) according to claim 1, **characterised in that** said high-strength steel also comprises the following percentages by weight, compared to the total weight of the material, of the following alloying elements:
- Aluminium (0% ÷ 0.015%);
- Titanium (0% ÷ 0.015%);
- Manganese (0% ÷ 0.10%);
- Silicon (0% ÷ 0.10%);
- Sulphur (0% ÷ 0.005%);
- Phosphorus (0% ÷ 0.008%).

3. Packing cup (22) according to claim 1 or 2, **characterised in that** said high-strength steel is melted through vacuum induction melting technology and/or remelted through vacuum arc remelting technology.

4. Packing cup (22) according to claim 3, **characterised in that** said high-strength steel is subjected to plastic deformation cycles in order to improve its mechanical characteristics.

5. Packing cup (22) according to claim 3 or 4, **characterised in that** said high-strength steel is subjected to a heat treatment, through heat cycles carried out inside furnaces in controlled atmospheres, in order to maximise its characteristics of hardness, toughness and strength.

6. Packing cup (22) according to any one of the previous claims, **characterised in that** said two concentric discs (28 30) are shrink-fitted, so as to generate a tensile compression state on said inner disc (30).

7. Packing cup (22) according to claim 6, **characterised in that** one or more axial through holes (32) are made on said inner disc (30) for the passage of lubricating oil to be fed to said at least one sealing element.

8. Reciprocating compressor comprising one or more packing cups (22) according to any one of the previous claims.

## Patentansprüche

1. Dichtungsring (22) für den Zylinder (10) eines Hubkolbenverdichters, wobei der Dichtungsring (12) aus einer ersten äußeren Scheibe (28) und aus einer zweiten inneren Scheibe (30) ausgebildet ist, die konzentrisch zu der ersten äußeren Scheibe (28) ist und in welcher ein Sitz für wenigstens ein Abdichtungselement für einen Kolben (18) ausgebildet ist, **dadurch gekennzeichnet, dass** wenigstens eine von der inneren Scheibe (30) oder der äußeren Scheibe (28) aus einem hochfesten Stahl hergestellt ist, der die nachstehenden Gewichtsprozentanteile der nachstehenden Legierungselemente im Vergleich zu dem Gesamtgewicht des Materials aufweist:
- Kohlenstoff (0,13 % - 0,17 %);
- Chrom (1,80 % - 2,20 %);
- Nickel (9,50 % - 10,50 %);
- Kobalt (13,50 % - 14,50 %);
- Molybdän (0,90 % - 1,10 %).

2. Dichtungsring (22) nach Anspruch 1, **dadurch gekennzeichnet, dass** der hochfeste Stahl auch die nachstehenden Gewichtsprozentanteile der nachstehenden Legierungselemente im Vergleich zum Gesamtgewicht des Materials aufweist:
- Aluminium (0 % - 0,015 %);
- Titan (0 % - 0,15 %);
- Mangan (0 % - 0,10 %);
- Silizium (0 % - 0,10 %);
- Schwefel (0 % - 0,005 %);
- Phosphor (0 % - 0,008 %).

3. Dichtungsring (22) nach Anspruch 1 oder 2, **dadurch gekennzeichnet, dass** der hochfeste Stahl mittels Vakuuminduktions-Schmelztechnologie geschmolzen wird und/oder durch eine Vakuumlichtbogen-Umschmelztechnologie umgeschmolzen wird.

4. Dichtungsring (22) nach Anspruch 3, **dadurch gekennzeichnet, dass** der hochfeste Stahl plastischen Verformungszyklen unterworfen wird, um seine mechanischen Eigenschaften zu verbessern.

5. Dichtungsring (22) nach Anspruch 3 oder 4, **dadurch gekennzeichnet, dass** der hochfeste Stahl einer Wärmebehandlung durch in Öfen unter gesteuerten Atmosphären ausgeführten Wärmezyklen unterzogen wird, um seine Eigenschaften bezüglich Härte, Zähigkeit und Festigkeit zu maximieren.

6. Dichtungsring (22) nach einem der vorstehenden Ansprüche, **dadurch gekennzeichnet, dass** die zwei konzentrischen Scheiben (28, 30) durch Schrumpfung aneinander befestigt sind, um einen Zugkompressionszustand auf der inneren Scheibe (30) zu erzeugen.

7. Dichtungsring (22) nach Anspruch 6, **dadurch gekennzeichnet, dass** ein oder mehrere axiale Durchgangslöcher (32) in der inneren Scheibe (30) für den Durchtritt von Schmieröl, das dem wenigstens einem Abdichtungselement zuzuführen ist, ausgebildet sind.

8. Hubkolbenverdichter mit einem oder mehreren Dichtungsringen (22) gemäß einem der vorstehenden Ansprüche.

## Revendications

1. Coupelle de garniture (22) pour le cylindre (10) d'un compresseur à piston, ladite coupelle de garniture (22) étant formée à partir d'un premier disque extérieur (28) et à partir d'un second disque intérieur (30), concentrique au dit premier disque extérieur (28) et à l'intérieur duquel un siège est formé pour au moins un élément d'étanchéité pour un piston (18), **caractérisé en ce qu'**au moins l'un dudit disque intérieur (30) ou dudit disque extérieur (28) est fabriqué à partir d'un acier à haute résistance qui est composé des pourcentages suivants en poids, en comparaison du poids total du matériau, des éléments d'alliage suivants :
Carbone (0,13% ÷ 0,17%) ;
Chrome (1,80% ÷ 2,20%) ;
Nickel (9,50% ÷ 10,50%) ;
Cobalt (13,50% ÷ 14,50%) ;
Molybdène (0,90% ÷ 1,10%).

2. Coupelle de garniture (22) selon la revendication 1, **caractérisée en ce que** ledit acier à haute résistance est composé aussi des pourcentages suivants en poids, en comparaison du poids total du matériau, des éléments d'alliage suivants :
Aluminium (0% ÷ 0,015%) ;
Titane (0% ÷ 0,015%) ;
Manganèse (0% ÷ 0,10%) ;
Silicium (0% ÷ 0,10%) ;
Soufre (0% ÷ 0,005%) ;
Aluminium (0% ÷ 0,008%).

3. Coupelle de garniture (22) selon la revendication 1 ou 2, **caractérisée en ce que** ledit acier à haute résistance est fondu par technologie de fusion par induction sous vide et/ou ou refondu par technologie de refusion à l'arc sous vide.

4. Coupelle de garniture (22) selon la revendication 3, **caractérisée en ce que** ledit acier à haute résistance est soumis à des cycles de déformation plastique afin d'améliorer ses caractéristiques mécaniques.

5. Coupelle de garniture (22) selon la revendication 3 ou 4, **caractérisée en ce que** ledit acier à haute résistance est soumis à un traitement thermique, par des cycles de chauffage réalisés à l'intérieur de fours sous des atmosphères contrôlées, afin de maximiser ses caractéristiques de dureté, de ténacité et de résistance.

6. Coupelle de garniture (22) selon l'une quelconque des revendications précédentes, **caractérisée en ce que** lesdits deux disques concentriques (28, 30) sont frettés, de façon à générer un état traction compression sur ledit disque intérieur (30).

7. Coupelle de garniture (22) selon la revendication 6, **caractérisée en ce qu'**un ou plusieurs trous de passage axiaux (32) sont pratiqués sur ledit disque intérieur (30) pour le passage d'huile lubrifiante à alimenter vers ledit au moins un élément d'étanchéité.

8. Compresseur à piston comprenant une ou plusieurs coupelles de garniture (22) selon l'une quelconque des revendications précédentes.
